# FASCICULE DE BREVET EUROPEEN

(11) **EP 3 969 299 B1**
(45) Date de publication et mention de la délivrance du brevet: **19.04.2023**
(21) Numéro de dépôt: 20722620.0
(22) Date de dépôt: 07.05.2020
(51) Int. Cl.: B60G 11/15, B60G 11/16, B60G 15/06

(54) **ÉLÉMENT DE SUSPENSION D'UN VÉHICULE**
AUFHÄNGUNGSELEMENT FÜR EIN FAHRZEUG
SUSPENSION ELEMENT OF A VEHICLE

(30) Priorité: 17.05.2019 FR 1905206
(43) Date de publication de la demande: 23.03.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: DUFFAU, Benjamin, 78960 VOISINS LE BRETONNEUX (FR)
(74) Mandataire: Renault Group
(86) Numéro de dépôt international: PCT/EP2020/062691
(87) Numéro de publication internationale: WO 2020/233995

(56) Documents cités:
- FR-A1- 2 973 738
- FR-A1- 3 002 996
- FR-A1- 3 024 396

## Description

La présente invention concerne un élément de suspension d'un véhicule.

Un tel élément de suspension, qui peut par exemple être constitué par une jambe de force, comprend schématiquement un ressort hélicoïdal de suspension, une pièce d'appui dotée d'une butée, et une pièce de centrage. Le ressort est disposé dans l'élément de suspension de sorte qu'une première extrémité dudit ressort vienne en appui contre la butée de la pièce d'appui et de sorte qu'une deuxième extrémité de ce ressort supporte une pièce de centrage. Le document FR2973738 divulgue un tel élément de suspension conformément au préambule de la revendication 1.

Autrement dit, un procédé d'assemblage de cet élément de suspension comprend généralement les étapes suivantes :
- Une étape de positionnement du ressort sur la pièce d'appui de sorte que sa première extrémité vienne en appui contre la butée,
- Une étape consistant à redresser le ressort tout en le gardant en contact avec la pièce d'appui, pour monter la pièce de centrage sur la deuxième extrémité dudit ressort,
- Une étape de compression de l'ensemble.

L'étape consistant à redresser le ressort est basé schématiquement sur un pivotement dudit ressort lui permettant de passer d'une position inclinée par rapport à son axe de fonctionnement à une position alignée sur ledit axe de fonctionnement.

Lors de ce procédé d'assemblage, le ressort hélicoïdal doit conserver sa position angulaire. Or, pour des questions de conception, il est fréquent que lors de l'étape consistant à redresser le ressort, celui-ci pivote légèrement autour de son axe de révolution, si bien que lors de l'étape de compression la première extrémité dudit ressort ne vienne plus en appui contre la butée, mais sur ladite butée. Le ressort est alors mal positionné par rapport à la pièce d'appui, car la butée ne joue plus efficacement son rôle de blocage angulaire dudit ressort. Il en résulte qu'un tel montage n'est pas satisfaisant, car il peut conduire à une migration dudit ressort hors de la pièce d'appui ou même à une casse dudit ressort.

Un élément de suspension selon l'invention est conçu pour permettre un bon positionnement du ressort dans la pièce d'appui lors de l'étape de compression, malgré un léger pivotement dudit ressort autour de son axe de révolution lors de l'étape précédente consistant à redresser le ressort.

Afin de bien évaluer le périmètre de l'invention, il est supposé que l'élément de suspension comporte le ressort, la pièce d'appui et la pièce de centrage.

L'invention a pour objet un élément de suspension d'un véhicule, comprenant un ressort hélicoïdal, et une pièce d'appui dotée d'une butée principale, le ressort étant monté sur la pièce d'appui de sorte qu'une première extrémité dudit ressort vienne en appui contre la butée principale.

Selon l'invention, la pièce d'appui comprend une butée secondaire placée devant la butée principale et contre laquelle est en appui la première extrémité du ressort lors d'un procédé d'assemblage dudit élément de suspension, ladite butée secondaire étant apte à s'effacer sous l'effet d'une pression exercée par le ressort sur ladite butée secondaire lors d'une étape de compression du ressort après que ledit ressort ait pivoté autour de son axe de révolution lors d'une étape consistant à redresser celui-ci pour faire interagir une deuxième extrémité du ressort avec un élément de centrage, pour venir en appui contre la butée principale.

Autrement dit, la butée secondaire se substitue au moins momentanément à la butée principale lors d'un procédé d'assemblage de l'élément de suspension. En effet, au cours d'un procédé d'assemblage de celui-ci, la première extrémité du ressort est en appui contre la butée secondaire. Lors de l'étape consistant à redresser le ressort durant ce procédé, si le ressort ne tourne pas, sa première extrémité va revenir en appui contre la butée secondaire pendant l'étape de compression. Il s'agit de la configuration normale sans incident. Au contraire, si le ressort pivote accidentellement durant cette étape consistant à redresser le ressort, il va venir en appui sur la butée secondaire, qui va alors s'effacer pour permettre à la première extrémité du ressort de venir en appui contre la butée principale. Donc quel que soit le scénario envisagé, le ressort sera toujours bien positionné, puisque sa première extrémité sera toujours en appui, soit contre la butée principale, soit contre la butée secondaire. Cette première extrémité ne se retrouvera donc jamais libre de mouvement, comme c'est le cas actuellement lors des procédés d'assemblage d'un tel élément de suspension. Le terme « effacer » signifie que la butée secondaire ne conserve pas sa position initiale, soit en se déformant, soit en se rompant. Le pivotement du ressort s'effectue avantageusement autour de son axe de révolution. La butée secondaire est préférentiellement réalisée en élastomère.

Selon une caractéristique possible de l'invention, la butée secondaire est une lamelle souple et de faible épaisseur s'inscrivant dans un plan qui est parallèle à une face de la butée principale contre laquelle est apte à venir en appui la première extrémité du ressort. De cette manière, la butée secondaire est orientée de la même manière que la butée principale, mais en étant légèrement décalée par rapport à la butée principale. Pour cette configuration, la butée secondaire va se plier sous l'effet de la pression exercée par la première extrémité du ressort sur celle-ci, afin de permettre à ladite butée secondaire de ne pas empêcher ladite première extrémité de venir en appui contre la butée principale.

Selon une caractéristique possible de l'invention, la lamelle a une épaisseur comprise entre 1 mm et 3mm. Préférentiellement, cette épaisseur est égale à 2mm.

Selon une caractéristique possible de l'invention, la butée principale et la butée secondaire sont séparées par un espace libre. En effet, la butée principale de doit pas empêcher l'effacement de la butée secondaire, et la présence de cet espace permet à la butée secondaire de se déformer ou de se rompre sans être gênée par la butée principale.

Selon une caractéristique possible de l'invention, la longueur de l'espace séparant la butée principale et la butée secondaire est comprise entre 3mm et 10mm. Préférentiellement cette longueur est égale à 5mm.

Selon une caractéristique possible de l'invention, le fond de l'espace est situé à une hauteur qui est inférieure à celle de la partie de la pièce d'appui qui est localisée derrière la butée secondaire par rapport à la butée principale, un évidement délimité par une face de la butée secondaire étant pratiqué au pied de la butée secondaire dans ladite partie, de sorte que le fond dudit évidement soit situé à la même hauteur que celle du fond dudit espace. La présence de l'évidement de l'autre côté de la butée secondaire par rapport à la butée principale, permet de favoriser la déformation de la butée secondaire lorsque la première extrémité du ressort exerce une pression sur ladite butée secondaire.

Selon une caractéristique possible de l'invention, la profondeur de l'évidement par rapport à la hauteur de la partie de la pièce d'appui qui est localisée derrière la butée secondaire, est comprise entre 1mm et 3mm. Préférentiellement, la profondeur de l'évidement est égale à 2mm.

Selon une caractéristique possible de l'invention, la lamelle est apte à se plier dans l'espace pour se retrouver parallèle au fond dudit espace lorsque la première extrémité du ressort vient en appui sur la butée secondaire. De cette manière, puisque la butée secondaire est de faible épaisseur, une fois qu'elle se retrouve au fond de l'évidement parallèlement au fond dudit évidement, elle ne va pas perturber la mise en appui de la première extrémité du ressort contre la butée principale.

Selon une caractéristique possible de l'invention, la pièce d'appui est placée dans une coupelle. Cette coupelle peut par exemple être une coupelle d'amortisseur.

L'invention a pour autre objet un procédé d'assemblage d'un élément de suspension selon l'invention.

Selon l'invention, le procédé comprend les étapes suivantes :
- Une étape de positionnement du ressort sur la pièce d'appui de sorte que sa première extrémité vienne en appui contre la butée secondaire,
- Une étape consistant à redresser le ressort tout en le gardant en contact avec la pièce d'appui, pour faire interagir l'élément de centrage avec la deuxième extrémité dudit ressort,
- Si le ressort a pivoté durant l'étape consistant à redresser le ressort, une étape d'écrasement de la butée secondaire par le ressort pour permettre à la première extrémité dudit ressort de venir en appui contre la butée principale,
- Une étape de compression de l'ensemble

Le principe d'un tel procédé est de permettre à la première extrémité du ressort d'être toujours en appui contre une butée de la pièce d'appui, que le ressort ait ou non pivoté lors de l'étape consistant à redresser le ressort. Si le ressort ne pivote pas, la butée principale n'intervient jamais lors du procédé d'assemblage de l'élément de suspension, puisque la première extrémité du ressort sera en appui contre la butée secondaire lors de l'étape de compression. En revanche, si le ressort a pivoté accidentellement, la première extrémité du ressort va écraser la butée secondaire avant de venir en appui contre la butée principale. Avantageusement, le pivotement du ressort lors de l'étape consistant à redresser le ressort s'effectue autour de son axe de révolution.

Un élément de suspension selon l'invention présente l'avantage de permettre au ressort d'être toujours bien positionné par rapport à la pièce d'appui, grâce un aménagement judicieux de ladite pièce d'appui ne nécessitant aucune modification structurelle en profondeur de celle-ci. Un tel élément de suspension a de plus l'avantage de posséder un encombrement constant par rapport aux éléments de suspension existants, tout en offrant une fonctionnalité supplémentaire à travers la présence de la butée secondaire.

On donne ci-après une description détaillée d'un mode de réalisation préféré d'un élément de suspension selon l'invention, en se référant aux figures suivantes :
[Fig. 1] est une vue de côté d'un élément de suspension selon l'état de la technique illustrant une étape de mise en appui d'une extrémité du ressort contre une butée d'une pièce d'appui,
[Fig. 2] est une vue de côté de l'élément de suspension de la figure 1, illustrant une étape de relevage du ressort pour le montage d'une pièce de centrage,
[Fig. 3] est une vue de côté de l'élément de suspension de la figure 1, illustrant une étape de compression du ressort lorsque celui-ci n'a pas pivoté,
[Fig. 4] est une vue de côté de l'élément de suspension de la figure 1, illustrant une étape de compression du ressort lorsque celui-ci a pivoté,
[Fig. 5] est une vue de côté d'un élément de suspension selon l'invention illustrant une étape de mise en appui d'une extrémité du ressort contre une butée secondaire d'une pièce d'appui,
[Fig. 6] est une vue de côté de l'élément de suspension de la figure 5, illustrant une étape de relevage du ressort pour le montage d'une pièce de centrage,
[Fig. 7] est une vue de l'élément de suspension de la figure 5, illustrant une étape de compression du ressort lorsque celui-ci n'a pas pivoté,
[Fig. 8] est une vue de côté de l'élément de suspension de la figure 5, illustrant une étape de compression du ressort lorsque celui-ci a pivoté,
[Fig. 9] est une vue de côté d'une extrémité de la pièce d'appui d'un élément de suspension selon l'invention, ladite extrémité comprenant la butée principale et la butée secondaire,
[Fig. 10] est une vue en perspective d'une pièce d'appui et d'une coupelle d'amortisseur d'un élément de suspension selon l'invention,
[Fig. 11] est une vue en perspective d'un élément de suspension selon l'invention illustrant une étape de compression pour la fixation d'un écrou sur une tige d'amortisseur.

La description détaillée est focalisée sur un élément de suspension particulier, qui est représenté par une jambe de force.

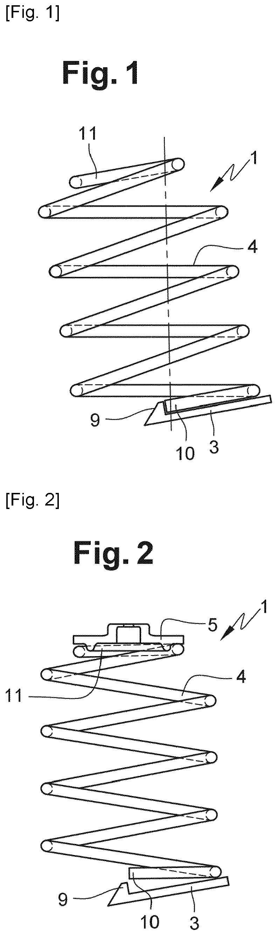

En se référant aux figure 1, 2, 3 et 4 une jambe de force 1 selon l'état de la technique comprend schématiquement une coupelle d'amortisseur 2, une pièce d'appui 3, un ressort 4 hélicoïdal et une pièce de centrage 5.

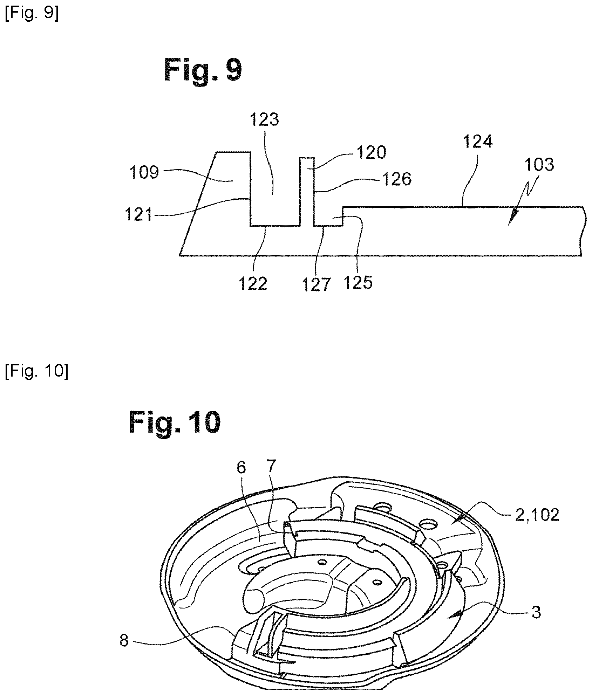

En se référant à la figure 10, la coupelle d'amortisseur est une pièce circulaire de faible épaisseur comprenant une gorge annulaire 6. La pièce d'appui 3 est une pièce annulaire ouverte, possédant deux extrémités 7, 8 et couvrant un secteur angulaire supérieur à 180°. Cette pièce d'appui 3 est insérée dans la gorge annulaire 6 de la coupelle d'amortisseur 2.

En se référant aux figures 1, 2, 3 et 4, la pièce d'appui 3 d'une jambe de force 1 selon l'état de la technique comprend une butée principale 9 contre laquelle est destinée à venir en appui une première extrémité 10 du ressort 4.

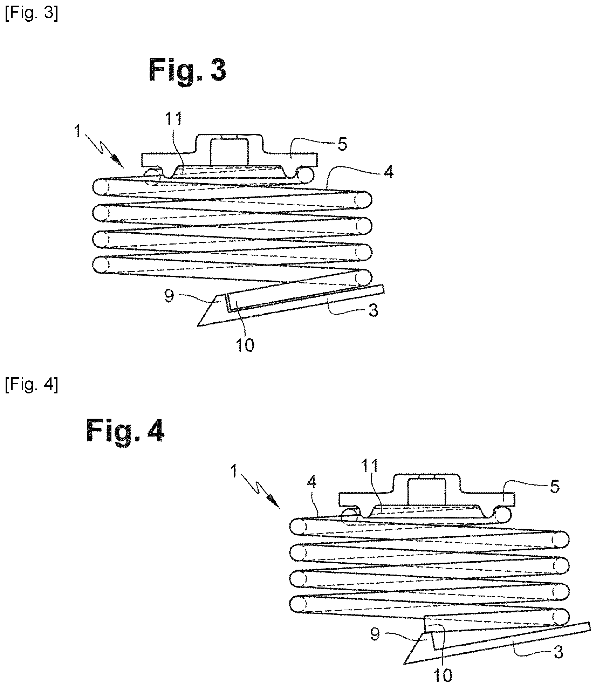

Un procédé d'assemblage d'une jambe de force 1 selon l'état de la technique comprend les étapes suivantes :
- Une étape de montage de la pièce d'appui 3 dans la coupelle d'amortisseur 2,
- Une étape de positionnement du ressort 4 sur la pièce d'appui 3, de sorte que sa première extrémité 10 vienne en appui contre la butée principale 9 comme cela est illustré à la figure 1,
- Une étape consistant à redresser le ressort 4 tout en le gardant en contact avec la pièce d'appui 3, pour monter la pièce de centrage 5 sur une deuxième extrémité 11 dudit ressort 4, comme cela est illustré à la figure 2,
- Une étape de compression du ressort 4 pour fixer un écrou 12 d'une tige 13 d'amortisseur comme cela est illustré aux figures 3 et 4.

Si lors de l'étape consistant à redresser le ressort 4 celui-ci n'a pas pivoté accidentellement autour de son axe de révolution, sa première extrémité 10 va revenir en appui contre la butée principale 9 de la pièce d'appui 3 pendant l'étape de compression, comme cela est illustré à la figure 3.

En revanche, si lors de l'étape consistant à redresser le ressort, celui-ci a malencontreusement pivoté autour de son axe de révolution, sa première extrémité 10 ne va plus revenir en appui contre la butée principale 9 de la pièce d'appui 3 pendant l'étape de compression, mais sur ladite butée 9, comme cela est illustré à la figure 4. Il en résulte que la première extrémité 10 du ressort 4 n'est plus calée contre la butée principale 9 de la pièce d'appui 3. Or, ce positionnement approximatif du ressort 4 peut engendrer un déplacement dudit ressort 4 par rapport à la coupelle d'amortisseur 2 et à la pièce d'appui 3, et/ou du bruit et/ou une casse de ce ressort 4.

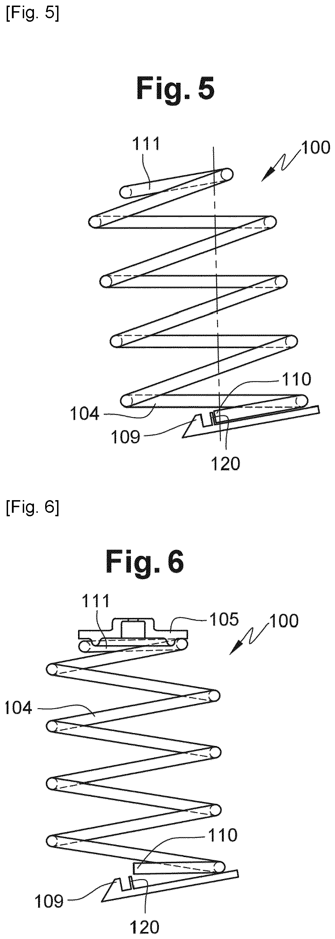

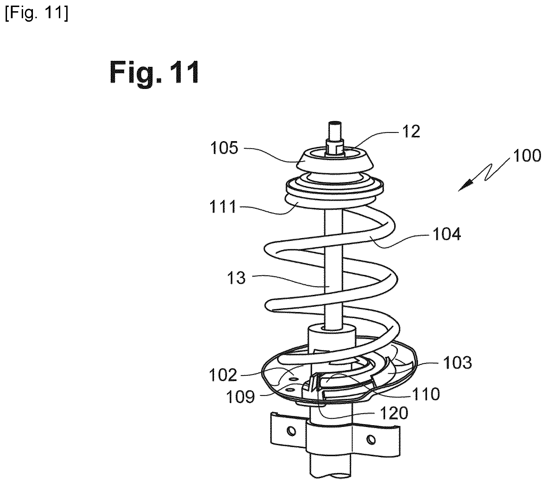

En se référant aux figures 5, 6, 7, 8, 9, 10 et 11, pour empêcher qu'un tel mauvais montage ne se produise, une jambe de force 100 selon l'invention comprend une pièce d'appui 103 dotée d'une butée secondaire 120 venant s'ajouter à la butée principale 109.

En se référant à la figure 9, la butée secondaire 120 est constituée par une lamelle souple placée devant la butée principale 109, à une distance de ladite butée principale 109 comprise entre 3mm et 10mm et préférentiellement égale à 5mm. Cette lamelle 120 est de faible épaisseur et s'inscrit dans un plan qui est parallèle à une face plane 121 de la butée principale 109 contre laquelle est destinée à venir en appui la première extrémité 110 du ressort 104. Avantageusement, la lamelle 120 possède une épaisseur comprise entre 1mm et 3mm et préférentiellement qui est égale à 2mm.Le fond 122 de l'espace 123 séparant la butée principale 109 et la butée secondaire 120 est situé à une hauteur qui est inférieure à la hauteur du fond 124 de la pièce d'appui 103, qui est placé de l'autre côté de la lamelle souple 120 par rapport à la butée principale 109. Un évidement 125 est pratiqué dans le fond 124 de la pièce d'appui 103, au pied de la lamelle souple 120, de sorte que l'évidement 125 soit délimité par une face 126 de ladite lamelle souple 12 et que le fond 127 dudit évidement 125 soit situé à la même hauteur que celle du fond 122 de l'espace 123 séparant les deux butées 109, 120. Cet évidement 125 est prévu pour faciliter le pliage de la lamelle souple 120 lorsque le ressort 104 sera en appui sur ladite lamelle souple 120.

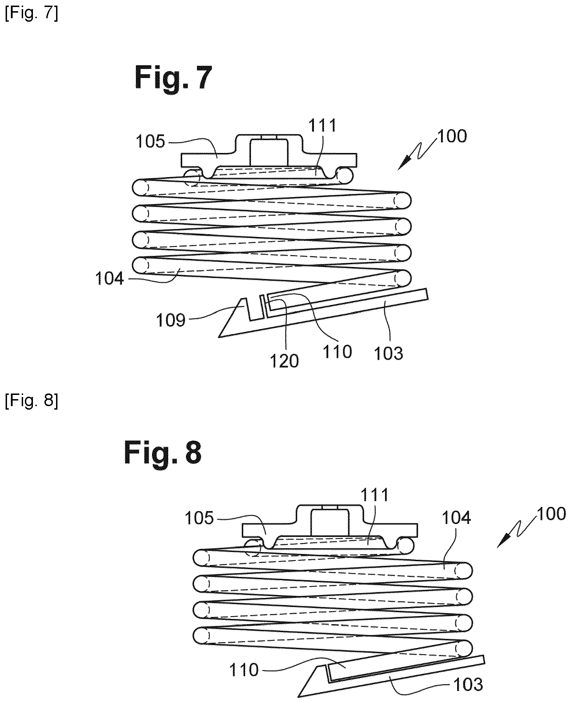

Les principales étapes d'un procédé d'assemblage d'une jambe de force 100 selon l'invention sont les suivantes,
- Une étape de montage de la pièce d'appui 103 dans la coupelle d'amortisseur 102,
- Une étape de positionnement du ressort 104 sur la pièce d'appui 103, de sorte que sa première extrémité 110 vienne en appui contre la butée secondaire 120 comme cela est illustré à la figure 5,
- Une étape consistant à redresser le ressort 104 tout en le gardant en contact avec la pièce d'appui 103, pour monter la pièce de centrage 105 sur une deuxième extrémité 111 dudit ressort 104 comme cela est illustré à la figure 6,
- Une étape de compression du ressort 104 pour fixer un écrou 12 d'une tige 13 d'amortisseur comme cela est illustré aux figures 7 et 8.

Si lors de l'étape consistant à redresser le ressort 104 celui-ci n'a pas pivoté accidentellement autour de son axe de révolution, sa première extrémité 110 va revenir en appui contre la butée secondaire 120 de la pièce d'appui 103 pendant l'étape de compression, comme cela est illustré à la figure 7. Pour cette configuration, la butée secondaire 120 se substitue complètement à la butée principale 109 d'une jambe de force 1 de l'état de la technique.

En revanche, si lors de l'étape consistant à redresser le ressort 104 celui-ci a malencontreusement pivoté autour de son axe de révolution, sa première extrémité 110 ne va plus revenir en appui contre la butée secondaire 120 de la pièce d'appui 103 pendant l'étape de compression, mais sur ladite butée secondaire 120 comme cela est illustré à la figure 8. La butée secondaire 120, qui est constituée par une lamelle souple, va alors se plier sous l'effet de la pression exercée par la première extrémité 110 du ressort 104. En se pliant de la sorte, la butée secondaire 120 s'efface et permet ainsi à la première extrémité 110 du ressort 104 de venir en appui contre la butée principale 109, comme dans le cas d'une jambe 1 d'effort de l'état de la technique.

La lamelle souple est dimensionnée à la fois pour servir de butée à la première extrémité 110 du ressort 104 et pour se plier lorsque ladite première extrémité 110 arrive au-dessus de cette lamelle 120, en exerçant une pression sur ladite lamelle 120.

## Revendications

1. Elément de suspension (1, 100) d'un véhicule, comprenant un ressort hélicoïdal (4, 104), et une pièce d'appui (3, 103) dotée d'une butée principale (9, 109), le ressort (4, 104) étant monté sur la pièce d'appui (4, 104) de sorte qu'une première extrémité (10, 110) dudit ressort (4, 104) vienne en appui contre la butée principale (9, 109), **caractérisé en ce que** la pièce d'appui (103) comprend une butée secondaire (120) placée devant la butée principale (109) et contre laquelle est en appui la première extrémité (110) du ressort (104) lors d'un procédé d'assemblage dudit élément de suspension (100), ladite butée secondaire (120) étant apte à s'effacer sous l'effet d'une pression exercée par le ressort (104) sur ladite butée secondaire (120) lors d'une étape de compression du ressort (104) après que ledit ressort (104) ait pivoté autour de son axe de révolution lors d'une étape consistant à redresser celui-ci pour faire interagir une deuxième extrémité (111) du ressort (104) avec un élément de centrage (105), pour venir en appui contre la butée principale (109).

2. Elément de suspension selon la revendication 1, **caractérisée en ce que** la butée secondaire (120) est une lamelle souple et de faible épaisseur s'inscrivant dans un plan qui est parallèle à une face (121) de la butée principale (109) contre laquelle est apte à venir en appui la première extrémité (110) du ressort (104).

3. Elément de suspension selon la revendication 2, **caractérisée en ce que** la lamelle (120) a une épaisseur comprise entre 1mm et 3mm.

4. Elément de suspension selon l'une quelconque des revendications 2 ou 3, **caractérisée en ce que** la butée principale (109) et la butée secondaire (120) sont séparées par un espace libre (123).

5. Elément de suspension selon la revendication 4, **caractérisée en ce que** la longueur de l'espace (123) séparant la butée principale (109) et la butée secondaire (120) est comprise entre 3mm et 10mm.

6. Elément de suspension selon l'une quelconque des revendications 4 ou 5, **caractérisée en ce que** le fond (122) de l'espace (123) est situé à une hauteur qui est inférieure à celle de la partie (124) de la pièce d'appui (103) qui est localisée derrière la butée secondaire (120) par rapport à la butée principale (109), et **en ce qu'**un évidement (125) délimité par une face (126) de la butée secondaire (120) est pratiqué au pied de la butée secondaire (120) dans ladite partie (124) de sorte que le fond (127) dudit évidement (125) soit situé à la même hauteur que celle du fond (122) dudit espace (123).

7. Elément de suspension selon la revendication 6, **caractérisée en ce que** la profondeur de l'évidement (125) par rapport à la hauteur de la partie de la pièce d'appui (103) qui est localisée derrière la butée secondaire (120), est comprise entre 1mm et 3mm.

8. Elément de suspension selon l'une quelconque des revendications 4 à 7, **caractérisée en ce que** la lamelle (120) est apte à se plier dans l'espace (123) pour se retrouver parallèle au fond (122) dudit espace (123) lorsque la première extrémité (110) du ressort (104) vient en appui sur la butée secondaire (120).

9. Elément de suspension selon l'une quelconque des revendications 1 à 8, **caractérisée en ce que** la pièce d'appui (104) est placée dans une coupelle (102).

10. Procédé d'assemblage d'un élément de suspension (100) selon l'une quelconque des revendications 1 à 9, **caractérisé en ce qu'**il comprend les étapes suivantes :
- Une étape de positionnement du ressort (104) sur la pièce d'appui (103) de sorte que sa première extrémité (110) vienne en appui contre la butée secondaire (120),
- Une étape consistant à redresser le ressort (104) tout en le gardant en contact avec la pièce d'appui (103), pour faire interagir l'élément de centrage (105) avec la deuxième extrémité (111) dudit ressort (104),
- Si le ressort (104) a pivoté durant l'étape consistant à redresser le ressort (104), une étape d'écrasement de la butée secondaire (120) par le ressort (104) pour permettre à la première extrémité (110) dudit ressort (104) de venir en appui contre la butée principale (109),
- Une étape de compression de l'ensemble.

## Patentansprüche

1. Aufhängungselement (1, 100) eines Fahrzeugs, welches eine Schraubenfeder (4, 104) und ein Abstützteil (3, 103) mit einem Hauptanschlag (9, 109) umfasst, wobei die Feder (4, 104) so auf dem Abstützteil (4, 104) angebracht ist, dass ein erstes Ende (10, 110) der Feder (4, 104) an dem Hauptanschlag (9, 109) zur Anlage kommt, **dadurch gekennzeichnet, dass** das Abstützteil (103) einen sekundären Anschlag (120) umfasst, der vor dem Hauptanschlag (109) angeordnet ist und an dem das erste Ende (110) der Feder (104) während eines Vorgangs des Zusammenbaus des Aufhängungselements (100) anliegt, wobei der sekundäre Anschlag (120) in der Lage ist, unter der Wirkung eines Drucks, der von der Feder (104) auf den sekundären Anschlag (120) in einem Schritt des Zusammendrückens der Feder (104) ausgeübt wird, nachzugeben, nachdem die Feder (104) in einem Schritt, der darin besteht, sie wieder aufzurichten, um ein zweites Ende (111) der Feder (104) mit einem Zentrierelement (105) interagieren zu lassen, sich um ihre Rotationsachse gedreht hat, um am Hauptanschlag (109) zur Anlage zu kommen.

2. Aufhängungselement nach Anspruch 1, **dadurch gekennzeichnet, dass** der sekundäre Anschlag (120) eine nachgiebige Lamelle von geringer Dicke ist, die in einer Ebene liegt, welche parallel zu einer Fläche (121) des Hauptanschlags (109) ist, an der das erste Ende (110) der Feder (104) in der Lage ist, zur Anlage zu kommen.

3. Aufhängungselement nach Anspruch 2, **dadurch gekennzeichnet, dass** die Lamelle (120) eine Dicke zwischen 1 mm und 3 mm aufweist.

4. Aufhängungselement nach einem der Ansprüche 2 oder 3, **dadurch gekennzeichnet, dass** der Hauptanschlag (109) und der sekundäre Anschlag (120) durch einen freien Zwischenraum (123) getrennt sind.

5. Aufhängungselement nach Anspruch 4, **dadurch gekennzeichnet, dass** die Länge des Zwischenraumes (123), der den Hauptanschlag (109) und den sekundären Anschlag (120) trennt, zwischen 3 mm und 10 mm beträgt.

6. Aufhängungselement nach einem der Ansprüche 4 oder 5, **dadurch gekennzeichnet, dass** sich der Boden (122) des Zwischenraumes (123) auf einer Höhe befindet, welche niedriger als diejenige des Teils (124) des Abstützteils (103) ist, der sich, vom Hauptanschlag (109) aus gesehen, hinter dem sekundären Anschlag (120) befindet, und dadurch, dass eine Vertiefung (125), die von einer Fläche (126) des sekundären Anschlags (120) begrenzt wird, am Fuß des sekundären Anschlags (120) im Teil (124) ausgebildet ist, derart, dass sich der Boden (127) der Vertiefung (125) auf derselben Höhe wie der Boden (122) des Zwischenraumes (123) befindet.

7. Aufhängungselement nach Anspruch 6, **dadurch gekennzeichnet, dass** die Tiefe der Vertiefung (125), bezogen auf die Höhe des Teils des Abstützteils (103), der sich hinter dem sekundären Anschlag (120) befindet, zwischen 1 mm und 3 mm beträgt.

8. Aufhängungselement nach einem der Ansprüche 4 bis 7, **dadurch gekennzeichnet, dass** die Lamelle (120) in der Lage ist, sich im Zwischenraum (123) zu verbiegen, so dass sie parallel zum Boden (122) des Zwischenraums (123) ist, wenn das erste Ende (110) der Feder (104) an dem sekundären Anschlag (120) zur Anlage kommt.

9. Aufhängungselement nach einem der Ansprüche 1 bis 8, **dadurch gekennzeichnet, dass** das Abstützteil (104) in einem Federteller (102) angebracht ist.

10. Verfahren zum Zusammenbau eines Aufhängungselements (100) nach einem der Ansprüche 1 bis 9, **dadurch gekennzeichnet, dass** es die folgenden Schritte umfasst:
- einen Schritt der Positionierung der Feder (104) auf dem Abstützteil (103), so dass ihr erstes Ende (110) am sekundären Anschlag (120) zur Anlage kommt,
- einen Schritt, der darin besteht, die Feder (104) aufzurichten und sie dabei in Kontakt mit dem Abstützteil (103) zu halten, um das Zentrierelement (105) mit dem zweiten Ende (111) der Feder (104) interagieren zu lassen,
- falls sich die Feder (104) während des Schrittes, der darin besteht, die Feder (104) aufzurichten, gedreht hat, einen Schritt der Druckverformung des sekundären Anschlags (120) durch die Feder (104), um dem ersten Ende (110) der Feder (104) zu ermöglichen, am Hauptanschlag (109) zur Anlage zu kommen,
- einen Schritt des Zusammendrückens der Anordnung.

## Claims

1. Suspension element (1, 100) of a vehicle, comprising a coil spring (4, 104), and a bearing part (3, 103) provided with a main stop (9, 109), the spring (4, 104) being mounted on the bearing part (4, 104) in such a manner that a first end (10, 110) of said spring (4, 104) comes to bear against the main stop (9, 109), **characterized in that** the bearing part (103) comprises a secondary stop (120) placed in front of the main stop (109), against which secondary stop the first end (110) of the spring (104) bears during a method for assembling said suspension element (100), said secondary stop (120) being capable of moving away under the effect of pressure exerted by the spring (104) on said secondary stop (120) during a stage of compressing the spring (104) after said spring (104) has pivoted about its rotational axis during a stage involving straightening said spring, so that a second end (111) of the spring (104) is made to interact with a centering element (105), in order to come to bear against the main stop (109).

2. Suspension element according to Claim 1, **characterized in that** the secondary stop (120) is a flexible, thin strip which is on a plane parallel to a face (121) of the main stop (109), against which the first end (110) of the spring (104) is capable of coming to bear.

3. Suspension element according to Claim 2, **characterized in that** the strip (120) has a thickness of between 1mm and 3mm.

4. Suspension element according to either one of Claims 2 and 3, **characterized in that** the main stop (109) and the secondary stop (120) are separated by a free space (123) .

5. Suspension element according to Claim 4, **characterized in that** the length of the space (123) separating the main stop (109) and the secondary stop (120) falls between 3mm and 10mm.

6. Suspension element according to either one of Claims 4 and 5, **characterized in that** the bottom (122) of the space (123) is situated at a height which is lower than that of the portion (124) of the bearing part (103) that is located behind the secondary stop (120) with respect to the main stop (109), and **in that** a recess (125) delimited by a face (126) of the secondary stop (120) is formed at the foot of the secondary stop (120) in said portion (124), such that the bottom (127) of said recess (125) is situated at the same height as that of the bottom (122) of said space (123).

7. Suspension element according to Claim 6, **characterized in that** the depth of the recess (125) with respect to the height of the portion of the bearing part (103) that is located behind the secondary stop (120) falls between 1mm and 3mm.

8. Suspension element according to any one of Claims 4 to 7, **characterized in that** the strip (120) is capable of bending in the space (123) so that it lies parallel with the bottom (122) of said space (123) when the first end (110) of the spring (104) comes to bear on the secondary stop (120).

9. Suspension element according to any one of Claims 1 to 8, **characterized in that** the bearing part (104) is placed in a retainer (102).

10. Method for assembling a suspension element (100) according to any one of Claims 1 to 9, **characterized in that** it comprises the following stages:
- a stage of positioning the spring (104) on the bearing part (103) in such a manner that its first end (110) comes to bear against the secondary stop (120),
- a stage involving straightening the spring (104) while keeping it in contact with the bearing part (103), in order to make the centering element (105) interact with the second end (111) of said spring (104),
- if the spring (104) has pivoted during the stage involving straightening the spring (104), a stage in which the secondary stop (120) is flattened by the spring (104) to allow the first end (110) of said spring (104) to come to bear against the main stop (109),
- a stage of compressing the assembly.
